# EUROPÄISCHE PATENTSCHRIFT

(11) **EP 1 776 570 B1**
(45) Veröffentlichungstag und Bekanntmachung des Hinweises auf die Patenterteilung: **19.09.2007**
(21) Anmeldenummer: 05776706.3
(22) Anmeldetag: 08.07.2005
(51) Int. Cl.: G01L 3/14, G01L 5/22

(54) **TORSIONSMODUL FÜR EINE DREHMOMENTERFASSUNGSEINRICHTUNG SOWIE VERFAHREN ZUR HERSTELLUNG EINES SPEICHENRADES FÜR EIN TORSIONSMODUL**
TORSION MODULE FOR A TORQUE DETECTION DEVICE, AND METHOD FOR PRODUCING A SPOKED WHEEL FOR A TORSION MODULE
MODULE DE TORSION DESTINE A UN DISPOSITIF DE DETECTION DU MOMENT DE TORSION ET PROCEDE DE FABRICATION D'UNE ROUE A RAYONS DESTINEE A UN MODULE DE TORSION

(30) Priorität: 10.07.2004 DE 102004033517
(43) Veröffentlichungstag der Anmeldung: 25.04.2007
(73) Patentinhaber: Leopold Kostal GmbH & Co. KG, 58507 Lüdenscheid (DE)
(72) Erfinder: HEITE, Volker, 57462 Olpe (DE); NIEDING, Klaus, 58553 Halver (DE); ABEL, Thomas, 58515 Lüdenscheid (DE); MOLDENHAUER, Knut, 58097 Hagen (DE); VOLMER, Werner, 58640 Iserlohn (DE)
(86) Internationale Anmeldenummer: PCT/EP2005/007394
(87) Internationale Veröffentlichungsnummer: WO 2006/005528

(56) Entgegenhaltungen:
- US-A- 2 403 952
- US-A- 5 165 288
- US-A1- 2004 159 165
- US-B1- 6 402 196

## Beschreibung

Die vorliegende Erfindung betrifft ein Torsionsmodul für eine Drehmomenterfassungseinrichtung eines Lenksystems oder Lenkkraftunterstützungssystems, umfassend ein Speichenrad mit einem an der Lenkspindel befestigbaren inneren Kranz und einem über Biegespeichen mit dem inneren Kranz verbundenen und konzentrisch zu diesem angeordneten äußeren Kranz, welche Biegespeichen bei einem Drehwinkelversatz zwischen dem inneren und dem äußeren Kranz zumindest bereichsweise einer Biegung unterworfen sind, und wobei zusätzlich zumindest ein biegesteifes, in eine zugeordnete Anschlaganordnung eingreifendes Anschlagelement vorhanden ist.

Außerdem betrifft die Erfindung ein Verfahren zur Herstellung eines Speichenrades für ein solches Torsionsmodul.

Drehmomenterfassungseinrichtungen der betreffenden Art werden in Kraftfahrzeugen eingesetzt, um das auf das Lenkrad ausgeübte Drehmoment zu erfassen, welches als Eingangsgröße für elektrische Lenkkraftunterstützungssysteme benötigt wird. Zur Drehmomenterfassung wird dabei ein Torsionsmodul benötigt, das einen Drehwinkelversatz zwischen zwei miteinander kooperierenden Bauteilen - Lenkspindel und Lenkrad - bei Anlegen eines Drehmoments gestattet. Als Torsionsmodul für eine Lenkdrehmomenterfassungseinrichtung wird bei der DE 27 34 182 ein Körper eingesetzt, der aus zwei in axialer Richtung voneinander beabstandeten Ringen gebildet ist, die mit mehreren im gleichen Winkelabstand zueinander angeordneten Metallstreifen verbunden sind. Während der obere Ring drehfest mit dem Lenkrad verbunden ist, ist der untere Ring drehfest mit der Lenkspindel verbunden. Bei Anlegen eines Drehmoments am Lenkrad und somit am dem oberen Ring unterliegen die Metallstreifen einer Torsion und sind daher einer Biegung unterworfen. Das Maß der Biegung der Metallstreifen gibt Aufschluß über das anliegende Drehmoment. Zur Erfassung dieser Größe sind an einigen Metallstreifen Dehnungsmeßstreifen angebracht, die an eine Auswerteeinheit angeschlossen sind. Ein Torsionsmodul dieser Art bietet jedoch zum einen keinen Schutz gegen Fehlmessungen durch Belastungen, die in axialer Richtung auftreten, da auch solche zu einer Biegung der Metallstreifen führen können, zum anderen weist es eine relativ große Bauhöhe in axialer Richtung auf.

Ein dem Oberbegriff des vorliegenden Patentanspruchs 1 entsprechendes Torsionsmodul, ist durch die US6402196 bekannt geworden.

Ein dem Oberbegriff des vorliegenden Patentanspruchs 1 entsprechendes Torsionsmodul, bei dem zwei Elemente konzentrisch zueinander angeordnet sind, ist durch die DE 37 37 696 A1 bekannt geworden. Beim Gegenstand dieses Torsionsmoduls ist ein innenliegender Kranz über als Biegestäbe ausgebildetete Speichen mit einem außenliegenden Kranz verbunden. Wechselweise zu den Biegespeichen sind biegesteife Speichen angeordnet, welche den inneren und den äußeren Kranz jeweils mittels eines in eine Anschlaganordnung eingreifenden Anschlagelements in Eingriff bringen.

Die Herstellung eines solchen Torsionsmodul erfolgt in der Regel als Schmiedeteil, das wegen der erforderlichen Präzision seiner Abmessungen eine aufwendige mechanische Nachbearbeitung erfordert. Dies ist sowohl bei einstückig mit dem inneren und äußeren Kranz ausgeführten Speichen der Fall als auch bei eine Ausführung mit separaten Speichen, wobei im letzteren Falle zusätzlich die Problematik einer geeigneten Befestigung der Speichen an den Kränzen auftritt.

Aufgabe der vorliegenden Erfindung ist es deshalb, ein Torsionsmodul der genannten Art bereitzustellen, bei dem eine einfache und kostengünstige Herstellbarkeit bei gleichzeitiger Gewährleistung der erforderlichen Präzision möglich ist.

Diese Aufgabe wird erfindungsgemäß dadurch gelöst, daß das Speichenrad als Metall-Druckgußteil ausgeführt ist, wobei die Biegespeichen als separate Einlegeteile durch den Druckgußprozeß mit dem inneren und dem äußeren Kranz jeweils formschlüssig verbunden sind.

In einer bevorzugten Weiterbildung der Erfindung ist das Anschlagelement oder die zum Eingriff des Anschlagelements diesem zugeordnete Anschlaganordnung durch einen Kunststoffrahmen gebildet, der das Ende eines biegesteifen Speichenabschnitts umfaßt bzw. in einer übermaßigen Öffnung des äußeren Kranzes gehalten ist.

Weitere besonders günstige Ausgestaltungen des erfindungsgemäßen Gegenstands sowie des zu seiner Herstellung geeigneten Verfahrens sind in den jeweiligen Unteransprüchen angegeben und werden anhand des in der Zeichnung dargestellten Ausführungsbeispiels näher erläutert.

Dabei zeigen:

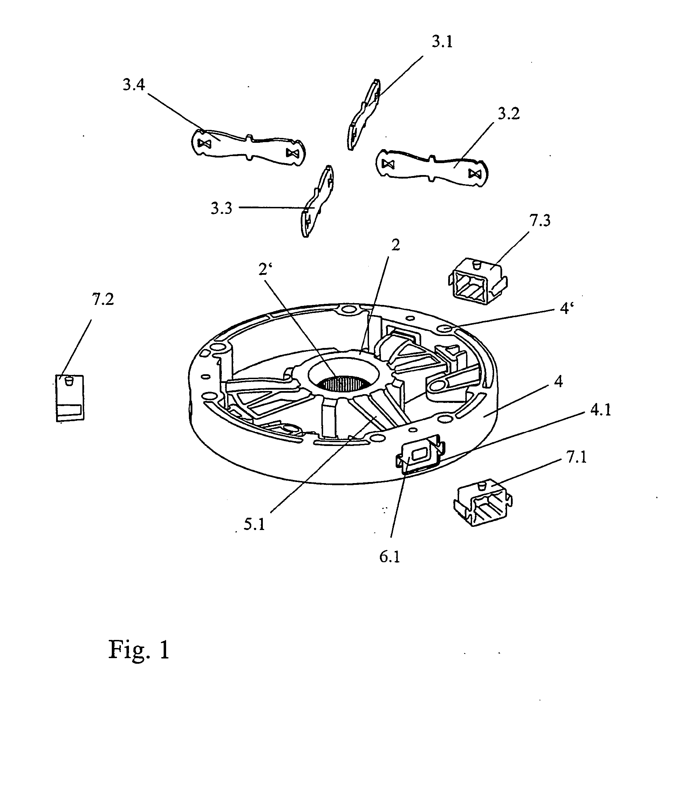

- **Fig. 1:**: ein Torsionsmodul gemäß der o.a. bevorzugten Weiterbildung in einer perspektivischen Explosions-Ansicht

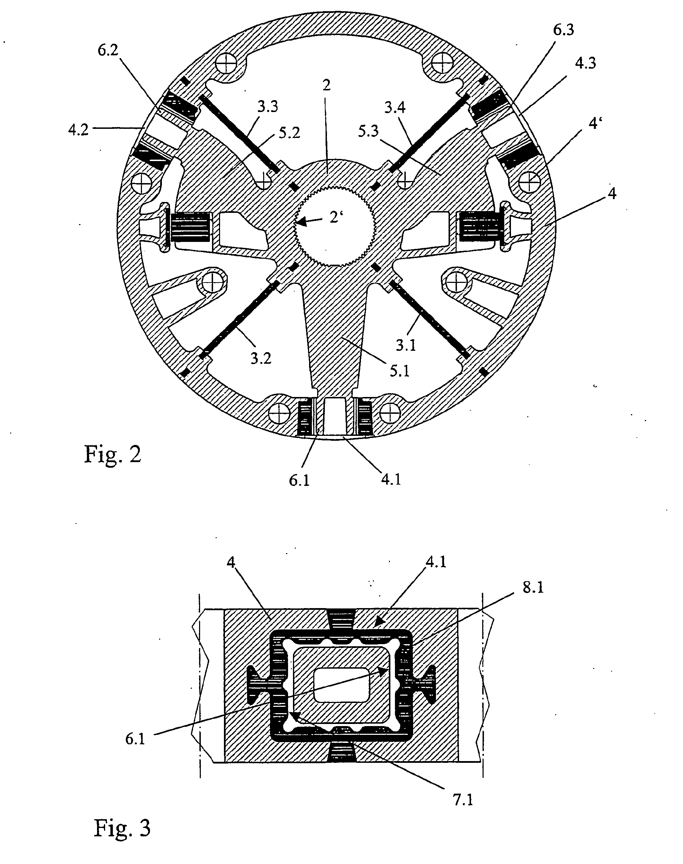

- **Fig. 2:**: das Torsionsmodul der Fig. 1 im Querschnitt
- **Fig. 3:**: einen tangentialen Schnitt durch eine Anschlaganordnung des Torsionsmoduls der Fig. 1 als Detail

Wie aus den Zeichnungen ersichtlich ist, umfaßt ein erfindungsgemäßes Torsionsmodul für eine Drehmomenterfassungseinrichtung eines Lenksystems oder Lenkkraftunterstützungssystems ein Speichenrad 1 mit vier Biegespeichen 3.1 - 3.4, die einen an der Lenkspindel befestigbaren inneren Kranz 2 mit einem konzentrisch zu diesem angeordneten, zur Befestigung an einem Lenkrad vorgesehenenen äußeren Kranz 4 verbinden, und welche bei einem Drehwinkelversatz zwischen dem inneren 2 und dem äußeren Kranz 4 zumindest bereichsweise einer Biegung unterworfen sind. Der innere Kranz 2 ist zur Befestigung an der Lenkspindel mit einem Vielzahnprofil 2' versehen, der äußere Kranz 4 weist zur Befestigung an dem Lenkrad in axialer Richtung sich erstreckende Bohrungen 4' auf.

In drei der vier Zwischenräume zwischen den Biegespeichen 3.1 - 3.4 des Speichenrades 1 sind jeweils biegesteife Speichenabschnitte 5.1 - 5.3 angeordnet, welche einstückig mit dem inneren Kranz 2 ausgeführt sind. Sie erstrecken sich von diesem bis nahe an den äußeren Rand des äußeren Kranzes 4, wobei sie zugeordnete radiale Öffnungen 4.1 - 4.3 des äußeren Kranzes 4 durchgreifen. Sie bilden im Bereich ihres Durchgriffs durch den äußeren Kranz 4 Anschlagelemente 6.1 - 6.3 aus, die in Kooperation mit in den radialen Öffnungen 4.1 - 4.3 des äußeren Kranzes 4 gebildeten Anschlageinrichtungen 7.1 - 7.3 das Maß des Drehwinkelversatzes zwischen dem inneren 2 und dem äußeren Kranz 4 auf einen Maximalbetrag begrenzen. Dabei können sowohl - wie in dem hier dargestellten Ausführungsbeispiel - die Anschlageinrichtungen 7.1 -7.3 als auch alternativ hierzu die Anschlagelemente 6.1 - 6.3 durch separate Teile gebildet sein. Es ist aber auch möglich, völlig ohne weitere separate Teile auszukommen, wobei dann die Anschlagelemente 6.1 - 6.3 und die Anschlageinrichtungen 7.1 -7.3 direkt durch die Metallteile des inneren 2 bzw. die Öffnungen 4.1 -4.3 des äußeren Kranzes 4 selbst gebildet sind.

Das Speichenrad 1 mit seinem äußeren Kranz 4, seinem inneren Kranz 2 sowie den mit diesem einstückig ausgeführten biegesteifen Speichenabschnitten 5.1 - 5.3 wird in einem Metall-Druckgußprozeß hergestellt. Die Biegespeichen 3.1 - 3.4 werden dabei als sogenannte Einlegeteile in dem Formwerkzeug für das Speichenrad 1 gehalten und durch ihre dazu ausgelegte Geometrie an ihren jeweiligen Enden formschlüssig mit dem inneren 2 und äußeren Kranz 4 des Speichenrades 1 verbunden. Als besonders vorteilhaft hat es sich dabei erwiesen, diesen Metall-Druckgußprozeß in zwei Schritte zu zerlegen, wobei in einem ersten Schritt der äußere Kranz 4 hergestellt und seinerseits mit den im Werkzeug eingelegten Biegespeichen 3.1 - 3.4 verbunden wird. In einer zweiten Form wird dann der bereits mit den Biegespeichen 3.1 - 3.4 verbundene äußere Kranz 4 eingelegt und der innere Kranz 2 gegossen und dabei ebenfalls mit den Biegespeichen 3.1 - 3.4 verbunden. Bei der mit der nachfolgenden Abkühlung des inneren Kranzes 2 verbundenen Schrumpfung desselben werden die Biegespeichen 3.1 - 3.4 unter eine leichte Zugspannung gesetzt, was für die Stabilität und die Funktion des Torsionsmoduls vorteilhaft ist.

Die Biegespeichen 3.1 - 3.4 bestehen aus Federstahl-Elementen, und sind in ihrer Geometrie so gestaltet, daß zum einen eine einwandfreie, insbesondere formschlüssige Verbindung mit den beiden Kränzen 2, 4 möglich ist, zum anderen eine definierte Verformung der Speichen 3.1 - 3.4 bei einer Biegebeanspruchung gegeben ist.

Die radialen Öffnungen 4.1 - 4.3 im äußeren Kranz 4 sowie die Außenkontur der Enden der Speichenabschnitte 5.1 - 5.3 werden durch in radialer Richtung zum Speichenrad bewegliche Kerne im Formwerkzeug für dasselbe geformt.

Die Öffnungen 4.1 - 4.3 im äußeren Kranz 4 können dann direkt als Anschlaganordnungen 7.1 - 7.3 für die die Anschlagelemente 6.1 - 6.3 bildenden Enden der Speichenabschnitte 5.1 - 5.3 fungieren.

Zur Erreichung einer besonders hohen Präzision bezüglich des Spaltmaßes zwischen den Anschlagelementen 6.1 - 6.3 und den diesen zugeordneten Anschlaganordnungen 7.1 - 7.3 werden die Anschlaganordnungen 7.1 - 7.3 in einem an die Fertigung des Metall-Gußkörpers anschließenden Kunststoff-Spritzgußvorgang als separate Kunststoff-Rahmen 8.1 - 8.3 in die Öffnungen 4.1 - 4.3 eingespritzt. Dabei werden sie in ihrer äußeren, d.h. den Öffnungen 4.1 - 4.3 zugewandten Kontur formschlüssig mit der Kontur der Öffnungen 4.1 - 4.3 verbunden, während ihre innere, den Anschlagelementen 6.1 - 6.3 zugewandte Kontur durch während des Kunststoff-Spritzgußvorgangs die Anschlagelemente 6.1 -6.3 paßgenau umfassende, durch ihre Wandstärken die gewünschten Spaltmaße vorgebende Werkzeug-Kappen geformt wird. Der im Metall-Gußkörpers möglicherweise nicht ganz zentrische Sitz eines der Anschlagelementen 6.1 - 6.3 bezüglich der diesem zugeordneten Öffnung 4.1 - 4.3 kann dabei durch eine unterschiedliche Wandstärke des jeweiligen Kunststoff-Rahmens 8.1 -8.3 ausgeglichen werden, so daß danach alle Anschlagelemente 6.1 - 6.3 genau zentrisch und mit dem richtigen Spaltmaß bezüglich der jetzt durch die Innenwände der Kunststoff-Rahmen 8.1 - 8.3 gebildeten Anschlaganordnungen 7.1 - 7.3 positioniert sind.

In analoger Weise kann das genaue Spaltmaß auch durch Kunststoffrahmen erzielt werden, die die Enden der Speichenabschnitte 5.1 - 5.3 umfassen und so die Anschlagelemente 6.1 - 6.3 bilden, die wiederum in die nun direkt durch die Öffnungen 4.1 - 4.3 gebildeten Anschlaganordnungen 7.1 - 7.3 eingreifen. Die Außenkontur dieser Rahmen wird analog zur zuvor beschriebenen Vorgehensweise durch Werkzeugeinsätze bestimmt, die in diesem Falle in die Öffnungen 4.1 - 4.3 im äußeren Kranz 4 eingesetzt sind.

Als Sensorelemente zur Erfassung des Drehwinkelversatzes zwischen dem inneren und dem äußeren Kranz sind im hier dargestellten Ausführungsbeispiel optoelektronische bzw. magnetoresistive Sensorelemente 9, 9' vorgesehen, die wie hier gezeigt drehfest z.B. mit dem inneren Kranz 2 verbunden sind und mit jeweils einer mit dem äußeren Kranz 4 verbundenen zur Kooperation mit dem jeweiligen Sensor 9, 9' geeigneten Maßverkörperung 10, 10' zur Generierung eines den Drehwinkelversatz zwischen den beiden Kränzen 2, 4 repräsentierenden Sensorausgangssignals zusammenwirken.

Sebstverständlich ist auch bei diesem Torsionsmodul der Einsatz etwa von Dehnungsmeßstreifen oder ähnlichen Sensoren, die wie bei bereits bekannten Torsionsmodulen z.B. auf den Biegespeichen angeordnet werden können, möglich.

## Patentansprüche

1. Torsionsmodul für eine Drehmomenterfassungseinrichtung eines Lenksystems oder Lenkkraftunterstützungssystems, umfassend ein Speichenrad (1) mit einem an der Lenkspindel befestigbaren inneren Kranz (2) und einem über Biegespeichen (3.1 - 3.4) mit dem inneren Kranz (2) verbundenen und konzentrisch zu diesem angeordneten äußeren Kranz (4), welche Biegespeichen (3.1 - 3.4) bei einem Drehwinkelversatz zwischen dem inneren (2) und dem äußeren Kranz (4) zumindest bereichsweise einer Biegung unterworfen sind, und wobei zusätzlich zumindest ein biegesteifes, in eine zugeordnete Anschlaganordnung (7.1 - 7.3) eingreifendes Anschlagelement (6.1 - 6.3) vorhanden ist, **dadurch gekennzeichnet, daß** das Speichenrad als Metall-Druckgußteil ausgeführt ist, wobei die Biegespeichen (3.1 - 3.4) als separate Einlegeteile durch den Druckgußprozeß mit dem inneren (2) und dem äußeren Kranz (4) jeweils formschlüssig verbunden sind.

2. Torsionsmodul nach Anspruch 1, **dadurch gekennzeichnet, daß** die Biegespeichen (3.1 - 3.4) als Federstahl-Elemente ausgebildet sind.

3. Torsionsmodul nach Anspruch 1 oder 2, **dadurch gekennzeichnet, daß** die Öffnungen (4.1 - 4.3) im äußeren Kranz (4) direkt die Anschlaganordnungen (7.1 - 7.3) für die Anschlagelemente (6.1 - 6.3) bilden.

4. Torsionsmodul nach Anspruch 3, **dadurch gekennzeichnet, daß** die Anschlagelemente (6.1 - 6.3) als separate Kunststoff-Rahmen ausgebildet sind, die formschlüssig die in die Öffnungen (4.1 - 4.3) in dem äußeren Kranz (4) eingreifenden Enden von mit dem inneren Kranz (2) einstückig ausgeführten biegesteifen Speichenabschnitten (5.1 - 5.3) umfassen.

5. Torsionsmodul nach Anspruch 1 oder 2, **dadurch gekennzeichnet, daß** die Anschlaganordnungen (7.1 - 7.3) als separate Kunststoff-Rahmen (8.1 - 8.3) ausgebildet sind, die formschlüssig mit der jeweiligen Kontur der Öffnungen (4.1 - 4.3) in dem äußeren Kranz (4) verbunden sind.

6. Verfahren zur Herstellung eines Speichenrades (1) für ein Torsionsmodul für eine Drehmomenterfassungseinrichtung eines Lenksystems oder Lenkkraftunterstützungssystems, mit einem an der Lenkspindel befestigbaren inneren Kranz (2) und einem über Biegespeichen (3.1 - 3.4) mit dem inneren Kranz (2) verbundenen und konzentrisch zu diesem angeordneten äußeren Kranz (4), welche Biegespeichen (3.1 - 3.4) bei einem Drehwinkelversatz zwischen dem inneren (2) und dem äußeren Kranz (4) zumindest bereichsweise einer Biegung unterworfen sind, und wobei zusätzlich zumindest ein biegesteifes, in eine zugeordnete Anschlaganordnung (4.1 - 4.3) eingreifendes Anschlagelement (6.1 - 6.3) vorhanden ist, **gekennzeichnet durch** einen oder mehrere Metall-Druckgußprozess(e) bei dem (denen) der innere Kranz (2) und der äußere Kranz (4) des Speichenrades (1) als Gußteile ausgeführt werden, wobei die Biegespeichen (3.1 - 3.4) als Einlegeteile in dem (den) Formwerkzeug(en) gehalten und mit dem inneren (2) und dem äußeren Kranz (4) jeweils formschlüssig verbunden werden.

7. Verfahren nach Anspruch 6, **dadurch gekennzeichnet, daß** in einem ersten Metall-Druckgußprozess der äußere Kranz (4) hergestellt und dabei seinerseits mit den im Werkzeug eingelegten Biegespeichen (3.1 - 3.4) verbunden wird, und in einem anschließenden zweiten Metall-Druckgußprozess der bereits mit den Biegespeichen (3.1 - 3.4) verbundene äußere Kranz (4) in ein Formwerkzeug eingelegt und der innere Kranz (2) gegossen und dabei ebenfalls mit den Biegespeichen (3.1 - 3.4) verbunden wird.

8. Verfahren nach Anspruch 6 oder 7, **dadurch gekennzeichnet, daß** die radialen Öffnungen (4.1 - 4.3) im äußeren Kranz (4) und/oder die Außenkontur der Enden der Speichenabschnitte (5.1 - 5.3) durch in radialer Richtung zum Speichenrad (1) bewegliche Kerne in dem (den) Formwerkzeug(en) für dasselbe geformt werden.

9. Verfahren nach einem der Ansprüche 6 bis 8, **dadurch gekennzeichnet, daß** die Anschlaganordnungen (7.1 - 7.3) in einem an die Fertigung des Metall-Gußkörpers anschließenden Kunststoff-Spritzgußvorgang als separate Kunststoff-Rahmen (8.1 - 8.3) in die Öffnungen (4.1 - 4.3) eingespritzt werden.

10. Verfahren nach einem der Ansprüche 6 bis 8, **dadurch gekennzeichnet, daß** die Anschlagelemente (6.1 - 6.3) in einem an die Fertigung des Metall-Gußkörpers anschließenden Kunststoff-Spritzgußvorgang als separate Kunststoff-Rahmen um die Enden von mit dem inneren Kranz (2) einstückig ausgeführten biegesteifen Speichenabschnitten (5.1 - 5.3) umspritzt werden.

11. Verfahren nach Anspruch 9 oder 10, **dadurch gekennzeichnet, daß** die Kunststoff-Rahmen in ihrer, dem jeweils zur Kooperation mit ihnen vorgesehenen Anschlagpartner zugewandten Kontur durch während des Kunststoff-Spritzgußvorgangs durch ihre Wandstärken die gewünschten Spaltmaße vorgebenden Werkzeug-Einsätze geformt werden.

## Claims

1. Torsion module for a torque detection device of a steering system or steering power-assist system comprising a spoked wheel (1) with a hub (2) that can be fastened to the steering shaft and a rim (4) arranged concentric to the hub (2) and connected to the same by way of bending spokes (3.1 - 3.4), with the bending spokes (3.1 - 3.4) being subjected at least section-wise to bending if there is a rotation angle displacement between the hub (2) and the rim (4), and moreover with at least one deflection-resistant catch element (6.1 - 6.3) provided that engages in an allocated catch arrangement (7.1 - 7.3), **characterised by the fact** that the spoked wheel is executed as a metal die casting wherein each of the bending spokes (3.1 - 3.4) is joined as a separate insert to the hub (2) and to the rim (4) in a form-fit manner by means of the die-casting process.

2. Torsion module in accordance with Claim 1, **characterised by the fact** that the bending spokes (3.1 - 3.4) are designed as spring steel elements.

3. Torsion module in accordance with Claim 1 or Claim 2, **characterised by the fact** that the apertures (4.1 - 4.3) in the rim (4) directly form the catch arrangements (7.1 - 7.3) for the catch elements (6.1 - 6.3).

4. Torsion module in accordance with Claim 3, **characterised by the fact** that the catch elements (6.1 - 6.3) are designed as separate plastic frames which, in a form-fit manner, encompass the ends of the deflection-resistant spoke segments (5.1 - 5.3) that are executed in one piece with the hub (2) and engage in the apertures (4.1 - 4.2) in the rim (4).

5. Torsion module in accordance with Claim 1 or Claim 2, **characterised by the fact** that the catch arrangements (7.1 - 7.3) are designed as separate plastic frames (8.1 - 8.3) which are joined in a form-fit manner to the respective contour of the apertures (4.1 - 4.3) in the rim (4).

6. Process for manufacturing a spoked wheel (1) for a torsion module of a torque detection device of a steering system or steering power-assist system, with a hub (2) that can be attached to the steering shaft and a rim (4) arranged concentrically to the hub (2) and connected to the same via bending spokes (3.1 - 3.4), the bending spokes (3.1 - 3.4) being subjected at least section-wise to bending when there is a rotation angle displacement between the hub (2) and the rim (4), and furthermore with at least one deflection-resistant catch element (6.1 - 6.3) provided which engages in an allocated catch arrangement (4.1 - 4.3), **characterised by** one or more metal die-casting processes in the course of which the hub (2) and the rim (4) of the spoked wheel (1) are executed as castings with the bending spokes (3.1 - 3.4) held as inserts in the casting mould or moulds, and each of them connected to the hub (2) and the rim (4) in a form-fit manner.

7. Process in accordance with Claim 6, **characterised by the fact** that the rim (4) is produced in a first metal die-casting process and at the same time joined for its part with the bending spokes (3.1 - 3.4) inserted into the mould; and in a subsequent second metal die-casting process the rim (4), which is already joined to the bending spokes (3.1 - 3.4), is inserted into a casting mould and the hub (2) cast, at the same time being joined to the bending spokes (3.1 - 3.4).

8. Process in accordance with Claim 6 or Claim 7, **characterised by the fact** that the radial apertures (4.1 - 4.3) in the rim (4) and/or the outer contour of the ends of the spoke segments (5.1 - 5.3) are shaped by cores in the casting mould or moulds for the same which are radially moveable in relation to the spoked wheel (1).

9. Process in accordance with any of Claims 6 to 8, **characterised by the fact** that the catch arrangements (7.1 - 7.3) are injection-moulded into the apertures (4.1 - 4.3) as separate plastic frames (8.1 - 8.3) in a plastic injection-moulding process subsequent to the production of the metal casting.

10. Process in accordance with any of Claims 6 to 8, **characterised by the fact** that, in a plastic injection moulding process subsequent to the production of the metal die casting, the catch elements (6.1 - 6.3) are extrusion-coated as a separate plastic frame around the ends of deflection-resistant spoke segments (5.1 - 5.3) executed in one piece with the hub (2).

11. Process in accordance with Claim 9 or Claim 10, **characterised by the fact** that, in their contour facing the respective catch partner provided for cooperating with them, the plastic frames are shaped by mould inserts which determine the desired gap width during the plastic injection moulding process by way of their wall thicknesses.

## Revendications

1. Module de torsion pour un dispositif de détection d'un couple de rotation d'un système de direction ou d'un système d'assistance à la direction comprenant une roue à rayons (1) avec une couronne intérieure (2), pouvant être fixée à l'arbre de direction, et une couronne extérieure (4), reliée à la couronne intérieure (2) par l'intermédiaire de rayons flexibles (3.1 - 3.4) et agencée concentriquement par rapport à celle-ci, lesdits rayons flexibles (3.1 - 3.4) étant soumis, au moins par sections, à une flexion lors d'un écart d'angle de rotation entre la couronne intérieure (2) et la couronne extérieure (4), et au moins un élément de butée (6.1 - 6.3) résistant à la torsion, qui s'engage dans un organe de butée (7.1 - 7.3) y associé, étant prévu en supplément, **caractérisé en ce que** la roue à rayons est réalisée en tant que pièce moulée sous pression en métal, les rayons flexibles (3.1 - 3.4), en tant que pièces insérées, séparées, étant reliés, chacun, par emboîtement, à la couronne intérieure (2) et à la couronne extérieure (4) lors du processus de moulage sous pression.

2. Module de torsion selon la revendication 1, **caractérisé en ce que** les rayons flexibles (3.1 - 3.4) sont réalisés en tant qu'éléments en acier à ressorts.

3. Module de torsion selon revendication 1 ou 2, **caractérisé en ce que** les ouvertures (4.1 - 4.3), dans la couronne extérieure (4), forment directement les organes de butée (7.1 - 7.3) pour les éléments de butée (6.1 - 6.3).

4. Module de torsion selon la revendication 3, **caractérisé en ce que** les éléments de butée (6.1 - 6.3) sont réalisés en tant que cadres en matière synthétique séparés, qui enserrent par emboîtement les extrémités de sections de rayons (5.1 - 5.3) résistantes à la flexion, exécutées d'une pièce avec la couronne intérieure (2) qui s'engagent dans les ouvertures (4.1 - 4.3) pratiquées dans la couronne extérieure (4).

5. Module de torsion selon revendication 1 ou 2, **caractérisé en ce que** les organes de butée (7.1 - 7.3) sont formés en tant que cadres en matières synthétiques (8.1 - 8.3) séparés, qui sont reliés par emboîtement au contour respectif des ouvertures (4.1 - 4.3) pratiquées dans la couronne extérieure (4).

6. Procédé pour la fabrication d'une roue à rayons (1) pour un module de torsion pour un système de détection du couple de rotation d'un système de direction ou d'un système d'assistance à la direction, avec une couronne intérieure (2), pouvant être fixée à l'arbre de direction, et avec une couronne extérieure (4), reliée à la couronne intérieure (2) par l'intermédiaire de rayons flexibles (3.1 - 3.4) et agencée concentriquement par rapport à celle-ci, lesdits rayons flexibles (3.1 - 3.4) étant soumis, au moins par sections, à une flexion lors d'un écart d'angle de rotation entre la couronne intérieure (2) et la couronne extérieure (4), et au moins un élément de butée (6.1 - 6.3) résistant à la torsion, qui s'engage dans un organe de butée (4.1 - 4.3) y associé, étant prévu, **caractérisé en ce que** un ou plusieurs processus de moulage de métal sous pression, au cours duquel (desquels) la couronne intérieure (2) et la couronne extérieure (4) de la roue à rayons (1) sont fabriquées en tant que pièces moulées, les rayons flexibles (3.1 - 3.4) étant maintenus, en tant que pièces insérables, dans le (les) outil(s) de formage et reliés chacun, par emboîtement, à la couronne intérieure (2) et à la couronne extérieure (4).

7. Procédé selon la revendication 6, **caractérisé en ce que** la couronne extérieure (4) est fabriquée au cours d'un premier processus de moulage sous pression de métal, en étant, pour sa part, reliée en même temps aux rayons flexibles (3.1 - 3.4) insérés dans l'outil, et **en ce que**, lors d'un deuxième processus de moulage sous pression de métal, effectué ensuite, la couronne extérieure (4), déjà reliée aux rayons flexibles (3.1 - 3.4), est déposée dans un outil de moulage, et que la couronne intérieure (2) est coulée et, en même temps, également reliée aux rayons flexibles (3.1 - 3.4).

8. Procédé selon revendication 6 ou 7, **caractérisé en ce que** les ouvertures radiales (4.1 - 4.3), pratiquées dans la couronne extérieure (4), et / ou le contour extérieur des extrémités des sections de rayons (5.1 - 5.3) sont formées, pour la roue à rayon (1), dans l'outil / les outils de formage, par des noyaux mobiles dans la direction radiale par rapport à celle-ci.

9. Procédé selon l'une des revendications 6 à 8, **caractérisé en ce que** les organes de butée (7.1 - 7.3) sont injectés, sous la forme de cadres en matière synthétique séparés (8.1 - 8.3), dans les ouvertures (4.1 - 4.3), au cours d'un processus d'injection de matière synthétique effectué à la suite de la fabrication du corps métallique, moulé.

10. Procédé selon l'une des revendications 6 à 8, **caractérisé en ce que**, par un processus de moulage par injection de matière synthétique, effectué à la suite de la fabrication du corps métallique moulé, les éléments de butée (6.1 - 6.3), en tant que cadres en matière synthétique séparés, sont moulés autour des extrémités de sections de rayons (5.1 - 5.3) résistantes à la flexion, réalisées d'une pièce avec la couronne intérieure (2).

11. Procédé selon revendication 9 ou 10, **caractérisé en ce que** les cadres en matière synthétique sont façonnés dans leur contour orienté vers la butée respective, prévue pour coopérer avec chacun d'eux, par des inserts d'outil déterminant la dimension désirée de la fente par leurs épaisseurs de parois au cours du processus de moulage par injection de matière synthétique.
